# EUROPEAN PATENT APPLICATION

(11) **EP 0 898 096 A1**
(43) Date of publication of application: **24.02.1999**
(21) Application number: 98112962.0
(22) Date of filing: 13.07.1998
(51) Int. Cl.: F16H 55/56, F16H 9/18

(54) **Automatic variable-speed drive device comprising a centrifugal friction clutch**

(30) Priority: 20.08.1997 IT MI971953
(71) Applicant: TRANSFLUID S.r.l., 20016 Pero (Milano) (IT)
(72) Inventor: Gambini, Angelo, 20010 Pogliano Milanese (Milano) (IT)
(74) Representative: Kratter, Carlo, Dr. Ing.

(57) **Abstract**

An automatic variable-speed drive, in particular for motor vehicles, of the type comprising two pulleys, namely a driven pulley and a drive pulley (1), which are of variable diameter but of fixed distance between axes, and are connected together by a V-belt (2), the drive pulley (1) comprising thrust means (17) arranged to transmit the motion of an output shaft to the pulley and to automatically vary, proportionally to the velocity of the output shaft (7), the distance between two discs (3, 4) of the drive pulley, so as to vary the velocity of the belt (2). The thrust means act on at least one axially movable disc (4) of the drive pulley. The device comprises a friction clutch (11, 23A; 8, 9A) for connection between the thrust means and the drive pulley (1).

## Description

This invention relates to an automatic variable-speed drive device in accordance with the pre-characterising part of the main claim.

Known devices, particularly when applied to motor vehicles, have shown numerous drawbacks, related on the one hand to the fact that in known devices the thrust means act directly on the movable disc of the drive pulley and on the other hand to the fact that in known devices the engine braking effect cannot be utilized. The initially stated technical problem leads to limited vehicle controllability particularly during vehicle manoeuvring, for example during parking, and relatively rapid deterioration of the V-belt.

In this respect, in known devices if it is required for example to park the vehicle, hence with rapid frequent pressing and release of the accelerator pedal, the V-belt alternates continuously from static friction to dynamic friction, so that the vehicle undergoes a succession of sudden accelerations and idle moments.

The vehicle is hence difficult to handle, this having limited the use of such variable-speed drives in vehicles up to the present time.

Again, it should be noted that when the pulley is idle the sides of the V-belt slide against the disc surfaces, whereas during belt acceleration the entire work is done against the sides of the belt, which being stressed in this manner result in relatively rapid belt deterioration.

In known vehicles, when the foot is removed from the accelerator pedal the device goes into idle, and there is no longer interaction between the drive pulley and the output shaft. This is particularly dangerous if the vehicle is descending because the engine braking effect is lacking.

An object of this invention is to provide a variable-speed drive device which ensures perfect vehicle handling even during initial vehicle acceleration-deceleration, so providing vehicle movement without sudden jolting.

A further object is to provide a device which increases vehicle safety when the vehicle is moving but not accelerating.

These and further objects which will be apparent to an expert of the art are attained by a device in accordance with the characterising part of the accompanying claims.

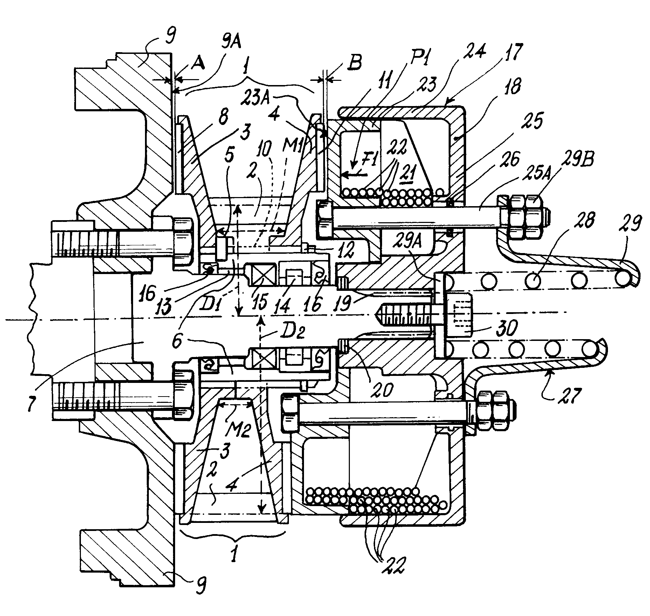

The invention will be more apparent from the accompanying figure, which is provided by way of non-limiting example and represents a schematic cross-section through the drive pulley of a device of the invention, shown in two different positions of utilization.

With reference to said figure a device of the invention comprises two pulleys, namely a drive pulley 1 and a driven pulley (not shown but of conventional type), which are of variable diameter but of fixed distance between axes, and are connected together by a V-belt 2.

Specifically, the pulley 1 comprises two discs 3, 4, of which one (3) is substantially fixed and the other (4) is movable coaxially to the first. The "fixed" first disc 3 is connected by toothing or by one or more pins 5 to the exterior of a bush 6. The "fixed" disc 3 connected to the bush 6 is able to undergo axial movement on the shaft 7, so that a discoidal portion 8 provided on the outer face of the fixed disc and formed of a conventional friction material, of the type usually used in clutches, can either move into contact with the outer surface 9A of the engine flywheel 9 connected to the shaft 7 (as in the lower part of the figure), or can remain spaced from said surface by a distance A (as in the upper part of the figure). The movable disc 4 is connected to toothing 10 on the bush 6 so as to be able to slide coaxially to this latter. This sliding is blocked at one end by a conventional split ring 12 and at the other end by contact with the "fixed' disc 3 (see the lower part of the figure).

As in the case of the "fixed" disc 3, the movable disc also comprises on its outer face a discoidal portion 11 formed of a friction material, of the type usually used in clutches. The bush 6 is supported by the shaft 7 via a usual plain bearing 13, a roller bearing 14, two seal rings 16 and a free wheel 15. This latter is arranged to rigidly connect the pulley 1 to the shaft 7 when this pulley changes from drive pulley to driven pulley, having a speed exceeding that of the engine.

Rigidly fixed on the shaft 7 there are also thrust means indicated overall by 17, arranged to transmit motion to the pulley 1 and to automatically vary, proportionally to the shaft speed, the distance between the two discs 3, 4 of the pulley 1. In the example, the means 17 are of the centrifugal action type comprising a body 18 connected to the shaft 7 via toothing 19 so as to be rotated by the shaft and at the same time be able to vary its axial position relative to the bush 6. For this purpose, spacers 20 are provided insertable between a shoulder on the shaft 7 and an annular recess in the body 18. This latter has a lateral wall 25 and an outer wall 24 defining a chamber within which there are provided a plurality of metal balls 22. This chamber is closed by a piston 23 which can slide along the inner face of the outer wall 24. The piston is rigidly secured to screws 25A passing through holes 26 provided in the wall 25 of the body 18. Besides rotating together with the body 18, the piston 23 can move axially relative to this latter. At the free end of the screws 25 there is provided an elastic return system, indicated overall by 27, arranged to maintain the piston 23 in a position P1 of maximum insertion into the chamber 21.

Tie elastic system 27 comprises a spring 28 the ends of which are connected to the screw 25A via a cap 29 and nuts 29B and, respectively, to the end of the shaft 7 via a washer 29A fixed by a screw 30.

When in this rest state, the piston 23 is in its position of maximum insertion P1 into the body 18, and the outer surface 23A of the piston is separated from the outer surface of the movable disc 4, and in particular from its friction portion 11, by a distance B. Under these conditions the "fixed" disc 3 is separated from the flywheel by the distance A. The distances A and B can be adjusted by adding or removing spacers 20.

Initially, by operating the engine accelerator pedal (not shown) the shaft 7 and the thrust means 17 are rotated. The drive pulley 1 remains however at rest because the friction surfaces 8, 11 of the discs 3 and 4 and, respectively, those 9A, 23A of the flywheel 9 and of the piston 23, are separated from each other.

On increasing the r.p.m. of the shaft 7 and hence the rotational speed of the thrust means 17, the balls 22 exert on the piston 23 by the effect of centrifugal force a force F1 directed in the opposite direction to the elastic force exerted by the spring 28.

On continuing to accelerate the engine, at a predetermined r.p.m., determined by the characteristics of the spring 28, the force F1 will exceed the elastic force. At this point the piston 23 will begin to move towards the pulley 1 to urge into mutual contact the friction surfaces of the discs 3 and 4, of the flywheel 9, and of the piston.

Only at this point, ie on reaching a predetermined r.p.m. of the shaft 7, the drive pulley 1 and the belt 2 begin to rotate. It should however be noted that, by virtue of the friction clutch between the thrust means 17 and the drive pulley 1, the belt 2 and hence the vehicle to be driven begin to rotate gradually without jolting, and without any sliding against the edges of the belt 2.

On further accelerating the engine, the movable disc 4 is urged still further towards the "fixed" disc 3 and the belt is gradually moved outwards to increase the pitch circle diameter and hence the speed of the belt.

By virtue of the free wheel 15 an engine braking effect can be utilized when the pulley 1 tends to assume a speed exceeding that of the engine.

Finally it should be noted that the aforedescribed embodiment is provided by way of non-limiting example and that numerous modifications are possible all falling within the same inventive concept, for example the clutch could be provided only between the movable disc 4 and the piston 23, or the thrust means 17 could be of a different type than that shown.

Again, in a possible modification, the connection between the output shaft and the drive pulley could be made using a conventional shoe clutch acting on the fixed disc 3. In this case the thrust means 17 and the return means 27 are connected to the bush 6.

## Claims

1. An automatic variable-speed drive, in particular for motor vehicles, of the type comprising two pulleys, namely a driven pulley and a drive pulley (1), which are of variable diameter but of fixed distance between axes, and are connected together by a V-belt (2), the drive pulley (1) comprising connection means (9A, 8, 23A, 11) arranged to transmit motion from an output shaft to the pulley, and thrust means (17) arranged to automatically vary, proportionally to the speed of the output shaft (7), the distance between two discs (3, 4) of the drive pulley, so as to vary the speed of the belt (2); said connection and thrust means acting on at least one axially movable disc (4) of the drive pulley, characterised in that the connection means comprise at least one friction clutch (11, 23A; 8, 9A).

2. A device as claimed in claim 1, characterised in that the clutch (23A, 11) connects the thrust means (17) to the drive pulley (1).

3. A device as claimed in claim 2, characterised in that the thrust means (17) are also arranged to act as connection means (11, 23A).

4. A device as claimed in claim 2, characterised in that the clutch comprises a friction element (11) secured to the outer surface of the movable disc (4) of the drive pulley, and arranged to come into contact with a thrust and friction surface (23A) of said thrust means (17).

5. A device as claimed in claim 4, characterised in that the clutch comprises a friction element (8) secured to the outer surface of the other disc (3) of the drive pulley (1), and arranged to come into contact with a friction surface (9A) of a flywheel (9) connected to the output shaft (7), said other disc being only partially movable coaxially to the output shaft (7).

6. A device as claimed in claim 2, characterised in that the thrust means (17) are shaped in such a manner as to transmit motion to the drive pulley (1) via the clutch (11, 23A; 8, 9A) only when a predetermined r.p.m. is reached.

7. A device as claimed in claim 1, characterised in that the thrust means (17) are of centrifugal type arid comprise an element (23) which moves towards a movable disc (4) of the drive pulley (1) in a manner proportional to the rotational speed of the output shaft (7) and against the action of an elastic element (27).

8. A device as claimed in claim 7, characterised in that the thrust means comprise a hollow body (17) secured to the output shaft (7) and defining a chamber (21) closed by the movable element (23) and within the interior of which there is provided loose material (22), the elastic element (27) being arranged to oppose the thrust exerted by the loose material on said movable element.

9. A device as claimed in claim 1, characterised in that the output shaft (7) and the drive pulley (1) are connected together by a member (15) able to transmit motion from said pulley to the shaft, but not vice versa.

10. A device as claimed in claim 9, characterised in that the motion transmission member is a free wheel (15).

11. A device as claimed in claim 9, characterised in that the drive pulley discs (3, 4) are connected to a coaxial bush (6) supported by the output shaft (7) via a rolling-contact bearing (14), a plain bearing (13) and a free wheel (15).

12. A device as claimed in claim 2, characterised by comprising spacers (20) for varying the axial position between the thrust means (17) and the output shaft (7) in order to adjust the clearances (A, B) between the contacting surfaces (11, 23A; 8, 9A) of the clutch.

13. A device as claimed in claim 1, characterised in that the clutch is of centrifugal type and acts on the "fixed" disc (3) of the drive pulley.

14. A device as claimed in claim 13, characterised in that the centrifugal clutch is of shoe type.
